# EUROPEAN PATENT APPLICATION

(11) **EP 3 150 649 A1**
(43) Date of publication of application: **05.04.2017**
(21) Application number: 15187417.9
(22) Date of filing: 29.09.2015
(51) Int. Cl.: C08G 59/42, C08G 59/68, C09D 163/00, C09J 163/00

(54) **CO-INITATOR SYSTEM FOR RESIN COMPOSITIONS**

(71) Applicant: Henkel AG & Co. KGaA, 40589 Düsseldorf (DE)
(72) Inventor: ZHAO, Ligang, 40593 Düsseldorf (DE); KOC, Ece, 43008 Tarragona (ES); COUTO, Iranzu, 48903 Barakaldo Vizcaya (ES)

(57) **Abstract**

The present invention relates to co-initiator systems for epoxy cure comprising a compound of formula {Mⁿ⁺(X)^{a-}_{n/a}}, wherein M is a metal cation, X is a counter ion, a is an integer from 1 to 3 and n is an integer from 1 to 6, and a carboxylic acid. The present invention further relates to resin compositions that contain such co-initiator system and are curable at room temperature as well as methods for the preparation of the co-initiator systems and the resin compositions, methods for curing them and the cured products.

## Description

The present invention relates to co-initiator systems for epoxy cure comprising an initiator compound and a carboxylic acid. The present invention further relates to resin compositions that contain such co-initiator system and are curable at room temperature as well as methods for the preparation of the co-initiator systems and the resin compositions, methods for curing them and the cured products.

In the manufacture of materials and coating substances, the curing rate is becoming increasingly important. It is often desirable for the system to polymerize as quickly as possible so as to enable a high production rate or short cycle times. In the context of polymerization, the initiators that initiate the curing reactions are therefore of particular significance. For example, initiators should be usable at room temperature and should produce rapid curing, but nevertheless not negatively influence the mechanical properties of the products. In addition, the initiators should also meet certain requirements such as good solubility in the system, and shelf stability. The initiators should also exhibit no secondary effects such as yellowing of the product.

The curing of epoxy resins is usually accomplished by use of catalysts, in particular onium salts, which in most cases are made up of iodonium salts or sulfonium salts with the anions SbF₆⁻, AsF₆⁻, and PF₆⁻, or alternatively AgSbF₆. In all these cases, curing is typically carried out by application of thermal energy or by irradiation, in particular UV radiation.

In the case of UV curing in particular, it often happens that the resin cures only in the regions that are exposed to a certain quantity of radiation energy. Complete curing of the resin depends on layer thickness: the radiation is attenuated upon penetration through the resin, or the radiation is largely attenuated or absorbed, for example, in the presence of a substance that is capable of absorbing a wavelength corresponding to that of the radiation energy. In addition, substrate transparency to the radiation is necessary and the frequency of irradiating light must be adapted to the absorption of the photoinitiator. Moreover, in light of energy costs and environmental concerns, thermal processes or other processes that rely on irradiation are not ideal and it would be preferably to accomplish curing by chemical means at ambient temperature. For this purpose, an MSbF₆/H₂O co-initiator system has been recently reported (Broomfield et al., Polymer 53 (2012), 5632-5640).

However, there exists still need in the art for further initiator systems that overcome some or all of the drawbacks of known systems. It was therefore an object of the present invention to discover and make available alternative initiators to those already known from the existing art. Especially the initiator system should be suitable to initiate a curing a room temperature by simultaneously not influencing the mechanical properties of the products in a negative way.

It has been found, surprisingly, that co-initiator systems comprising at least one initiator of the general formula {Mⁿ⁺(X)^{a-}_{n/a}} wherein M is a metal cation, X is a counter ion, a is an integer from 1 to 3 and n is an integer from 1 to 6, and at least one carboxylic acid, and, optionally, water, provide for an initiator system that can be used at room temperature, provides for rapid curing within a few minutes and does not adversely affect the mechanic properties of the resulting product.

In addition, it is highly versatile in that curing time and dispersibility can be controlled via the number of carbon atoms and carboxylic acid groups in the carboxylic acid used. In addition, the systems show good solubility in the typically used monomers and shelf stabilities of more than three months.

In a first aspect, the present invention therefore relates to a co-initiator system, wherein the system comprises
(1) at least one initiator of the general formula (I)

   {Mⁿ⁺(X)^{a-}_{n/a}} (I),

   wherein M is a metal cation, preferably selected from the group consisting of Na, K, Ag, Fe, Mg, Ca, Co, Cu, Al, and Ti, especially K and Ag, n is an integer from 1 to 6, especially 1; X is the counterion selected from the group consisting of hexafluoroantimonate (SbF₆⁻), hexafluorophosphate (PF₆⁻), boron tetrafluoride (BF₄⁻), hexafluoroaluminate (AlF₆³⁻), trifluoromethanesulfonate (CF₃SO₃⁻), nitrate (NO₃⁻), hexafluoroarsenate (AsF₆⁻), tetrakis(pentafluorophenylborate) (B[C₆F_{5]4}⁻), tetrakis[3.5-bis(trifluoromethyl)phenyl]borate (B[C₆H₃(CF₃)₂]₄⁻), tetraphenylborate (B[C₆H₅]₄⁻), hexafluorotitanate (TiF₆²⁻), hexafluorogermanate (GeF₆²⁻), hexafluorosilicate (SiF₆²⁻), hexafluoronickelate (NiF₆²⁻), or hexafluorozirconate (ZrF₆²⁻), especially hexafluoroantimonate (SbF₆⁻) and boron tetrafluoride (BF₄⁻), and a is an integer from 1 to 3,
(2) at least one carboxylic acid; and
(3) optionally water.

In another aspect, the invention relates to a resin composition comprising at least one co-initiator system according to the invention and at least one resin system, especially an epoxy system. Preferably, the invention relates to a co-initiator system for epoxy resin systems.

In still another aspect, the invention also encompasses a method for preparing a co-initiator system as described herein, comprising mixing the initiator of general formula (I) and the at least one carboxylic acid and optionally water.

Still another aspect is directed to a method for preparing a resin composition as described herein, comprising
(a) preparing a co-initiator system according to the invention in situ by mixing the initiator of general formula (I) and the at least one carboxylic acid and optionally water;
(b) combining the co-initiator system with at least one resin system to obtain the resin composition of the invention.

Another aspect relates to a method for curing a resin composition according to the invention, comprising
(a) providing a resin composition as described herein; and
(b) curing said resin composition at a temperature in the range of between 0 and 30°C, preferably about 20°C.

Also encompassed are cured products obtainable by curing a resin composition according to the methods described herein and the use of the described co-initiator system for cure of a resin system, preferably an epoxy resin system.

In the following, the invention is described in greater detail. It is however understood that the present invention is not limited to the below embodiments, but can easily be adapted to be used for other resin systems, with the scope of protection conferred being defined by the appended claims.

"At least one", as used herein, relates to one or more, preferably 1, 2, 3, 4, 5, 6, 7, 8, 9, 10 or more. It is understood that this term, when used in combination with the described components, does not relate to the absolute number of molecules, but rather to the type of the molecule used. By way of example only, the term "at least one carboxylic acid" thus means that one or more different carboxylic acids can be used.

In a preferred embodiment, the metal cation (M) of the initiators (I) according to the present invention can be selected from the group of the transition metals of the fourth or fifth period or of the first, second or third main group of the periodic system. Particularly preferably, the metal cation (M) is selected from the group encompassing Na, K, Ag, Fe, Mg, Co, Cu, Al, and Ti, especially K and Ag, most preferred the metal cation is Ag⁺.

The counterion (X) is selected from the group consisting of hexafluoroantimonate (SbF₆⁻), hexafluorophosphate (PF₆⁻), boron tetrafluoride (BF₄⁻), hexafluoroaluminate (AlF₆³⁻), trifluoromethanesulfonate (CF₃SO₃⁻), nitrate (NO₃⁻), hexafluoroarsenate (AsF₆⁻), tetrakis(pentafluorophenylborate) (B[C₆F₅]₄⁻), tetrakis[3.5-bis(trifluoromethyl)phenyl]borate (B[C₆H₃(CF₃)_{2]4}⁻), tetraphenylborate (B[C₆H₅]₄⁻), hexafluorotitanate (TiF₆²⁻), hexafluorogermanate (GeF₆²⁻), hexafluorosilicate (SiF₆²⁻), hexafluoronickelate (NiF₆²⁻), or hexafluorozirconate (ZrF₆²⁻). The preferred counterion (X) is selected from the group consisting hexafluoroantimonate (SbF₆⁻) and boron tetrafluoride (BF₄⁻). Most preferred is the counterion (X) hexafluoroantimonate (SbF₆⁻). a is an integer from 1 to 3, as understood by a person skilled in the art dependent on the used counterion (X).

It is also understood that while n can be any integer from 1 to 6, it is dependent on the oxidation state of the metal ion M. For example, if M is Ag, n is 1, if M is Fe, n can be 2 or 3, if M is Cu, n can be 1 or 2, etc.

In various preferred embodiments, the initiator according to formula (I) has the formular (II)

{Mn+(SbF₆)⁻ₙ} (II),

wherein M is a metal cation, preferably selected from the group consisting of Na, K, Ag, Fe, Mg, Ca, Co, Cu, Al, or Ti, especially K and Ag, most preferred Ag, and n is an integer from 1 to 6.

In various most preferred embodiments, the initiator according to formula (I) is AgSbF₆(Ag⁺SbF₆⁻).

In various embodiments, the carboxylic acid is selected from the group consisting of unsaturated or saturated, aromatic, cycloaliphatic and aliphatic, C₁₋₂₆ mono-, di- or polycarboxylic acids. Especially preferred the carboxylic acid is selected from the group consisting of saturated C₂₋₂₀ mono-, di- or polycarboxylic acids, more preferably saturated aliphatic C₂₋₂₀ mono- or dicarboxylic acids, most preferably acetic acid or propionic acid. For Example, the carboxylic acid may be a fatty acid with 12, 14, 16 or 18 carbon atoms, such as lauric acid, myristic acid, palmitic acid, oleic acid, linoic acid, linoleic acid, or stearic acid, or a dicarboxylic acid, such as oxalic acid, malonic acid, succinic acid, maleic acid, glutaric acid, adipic acid, pimelic acid, suberic acid, azelaic acid, and sebacic acid. Substituted or unsubstituted carboxylic acids, if substituted, the substituents can, for example, be selected from -OR, -SR, and -NRR', wherein R and R' are independently selected from H and C1-10 Alkyl. Examples for suitable substituted carboxylic acids include, without limitation, hydroxy carboxylic acids, such as lactic acid, malic acid, and citric acid. Especially preferred carboxylic acids are acetic acid, propionic acid, oxalic acid, malonic acid, succinic acid, maleic acid, lactic acid, malic acid and citric acid, preferably acetic acid, propionic acid, oxalic acid and succinic acid, most preferred acetic acid or propionic acid

In the co-initiator systems according to the invention, the weight ratio of initiator of general formula (I) to the carboxylic acid ranges from 1:100 to 2:1, preferably1:50 to 1:1, more preferably 1:20 to 1:2.

The initiators according to the present invention preferably initiate polymerization by forming cations. In a preferred embodiment, the initiators according to the present invention are also photoinitiators. For example, the curing mechanism of the MSbF₆/H₂O/carboxylic acid co-initiator system might be additional photo-cationic while the curing mechanism of the MSbF₆/carboxylic acid co-initiator system is usually cationic. Generally, the inventors of the present invention have surprisingly found that the co-initiator system can be used to cure cationically curable resin compositions, in particular epoxy resin compositions, at room temperature, and provides for adhesive systems that show good adhesion to unprimed plastic (PVC, ABS, PMMA), wood laminate, glass, steel and aluminum substrates. Curing is achieved by hydrolysis of the initiator of general formula (I), preferably the hexafluoroantimonate (SbF₆⁻) salt, with carboxylic acids and, optionally, water and the addition to the resin system, especially an epoxy system. Such systems can be used at room temperature, provide full curing within a few minutes and do not adversely affect the mechanic properties of the hardened resins.

Curing time and dispersibility can be modulated by the number of carbon atoms and carboxylic acid groups of the carboxylic acid employed. Thus, the solubility in the resin systems that are to be cured can be controlled. Further, the described co-initiator systems provide for a shelf life of three months and more

In various embodiments, where the carboxylic acid used is solid under standard conditions (20°C, 1013 mbar), water can be added for the homogeneity and dispersibility of the carboxylic acid.

Further subjects of the present invention are compositions, in particular compositions comprising a resin system, that contain at least one co-initiator system according to the present invention. The term "composition", as used in this connection, refers, in the context of the present invention, to mixtures containing at least one co-initiator system according to the present invention and at least one resin as well as optional further additives that either are present because of the manner of manufacture of the initiators/co-initiator systems according to the present invention (for example solvents), or are mixed in subsequently (e.g. plasticizers, reactive diluents, fillers, and the like).

Accordingly, the composition according to the present invention preferably contains one or more additional constituents (additives) that are selected from the group of the fillers, stabilizers, hardener accelerators, antioxidants, adhesion promoters, rheology agents, thickeners, binders, solvents, radical scavengers, catalysts, reactive diluents, plasticizers, additive resins, flame protection additives, and impact additives such as, for example, elastomers, thermoplastics, core-shell particles, nanoparticles, block copolymers, and nanotubes. Depending on the intended end use, further usual additives such as dispersants, anti-scratch agents, pigments, dyes, emulsifiers (surfactants), and corrosion inhibitors can be added to the compositions according to the present invention.

The concentration of the initiators according to formula (I) in the compositions preferably ranges from 0.05 to 5 wt.-%, preferably 0.1 to 2 wt.-%, more preferably 0.2 to 1 wt.-%, based on the total weight of the composition.

The concentration of the carboxylic acid in the compositions preferably ranges from 0.5 to 15 wt.-%, preferably 1 to 10 wt.-%, more preferably 2 to 7 wt.-%, based on the total weight of the composition.

Suitable as plasticizers are, for example, by preference esters such as abietic acid esters, adipic acid esters, azelaic acid esters, benzoic acid esters, butyric acid esters, acetic acid esters, phosphoric acid esters, phthalic acid esters; esters of higher fatty acids having approximately 8 to approximately 44 carbon atoms, such as dioctyl adipate, diisodecyl succinate, dibutyl sebacate or butyloleate, esters of OH-group-carrying or epoxidized fatty acids, fatty acid esters, and fats, glycolic acid esters, phosphoric acid esters, phthalic acid esters of linear or branched alcohols containing 1 to 12 carbon atoms such as, for example, dioctyl phthalate, dibutyl phthalate, or butylbenzyl phthalate, propionic acid esters, sebacic acid esters, sulfonic acid esters, thiobutyric acid esters, trimellitic acid esters, citric acid esters, and esters based on nitrocellulose and polyvinyl acetate, as well as mixtures of two or more thereof. The asymmetrical esters of the difunctional aliphatic dicarboxylic acids are particularly suitable, for example the esterification product of adipic acid monooctyl ester with 2-ethylhexanol.

Also suitable as plasticizers are, preferably, the pure or mixed ethers of monofunctional, linear, or branched C4-16 alcohols or mixtures of two or more different ethers of such alcohols, for example dioctyl ether.

In a further embodiment, end-capped polyethylene glycols are used as plasticizers, for example polyethylene or polypropylene glycol di-C1-4-alkyl ethers, in particular the dimethyl or diethyl ethers of diethylene glycol or dipropylene glycol, as well as mixtures of two or more thereof.

The composition according to the present invention can contain up to approximately 80 wt.-% fillers. Inorganic fillers are suitable as fillers, for example naturally occurring or synthetic materials such as, for example, quartz, nitrides (e.g. silicon nitride), glasses derived e.g. from Ce, Sb, Sn, Zr, Sr, Ba, and Al, colloidal silicon dioxide, feldspar, borosilicate glasses, kaolin, talc, titanium dioxide, and zinc glasses, as well as sub-micron-size silicon dioxide particles (e.g. pyrogenic silicon dioxides such as, for example, the silicon dioxides of the "Aerosil" "OX 50", "130", "150", and "200" series (Evonik Industries), as well as "Cab-O-Sil M5" (Cabot Corp.)), aluminum silicates, magnesium silicates, zeolites, bentonites, ground mineral substances, calcium carbonates, quartz dust, silicic acid anhydride, silicon hydrate or carbon black, magnesium carbonate, fired clay, clay, iron oxide, zinc oxide, titanium dioxide, cellulose, wood flour, mica, chaff, graphite, fine aluminum powder or flint powder, glass spheres, glass powder, glass fiber and chopped glass fibers, as well as further inorganic fillers known to one skilled in the art, as well as organic fillers, in particular chopped fibers or hollow plastic spheres, as well as functional fillers that positively influence rheological properties, for example highly dispersed silicic acid, in particular having a low BET surface area from 20 to 150, preferably 30 to 100, particularly preferably approximately 50 m²/g. In some cases it is possible to use fillers that impart thixotropy to the composition, for example swellable plastics such as PVC.

Suitable additive resins are all natural and synthetic resins such as, for example, colophonium derivatives (e.g. derivatives resulting from disproportionation, hydrogenation, or esterification), cumarone-indene and polyterpene resins, aliphatic or aromatic hydrocarbon resins (C-5, C-9, (C-5)2 resins), mixed C-5/C-9 resins, hydrogenated and partly hydrogenated derivatives of the aforesaid types, resins from styrene or α-methylstyrene, as well as terpene-phenol resins, and others as set forth in Ullmanns Enzyklopädie der technischen Chemie [Encyclopedia of chemical engineering] (4th ed.), vol. 12, pp. 525-555, Weinheim.

Suitable solvents are ketones, lower alcohols, lower carboxylic acids, ethers and esters such as (meth)acrylic acid (esters), acetone, acetylacetone, acetoacetic esters, methyl ethyl ketone, methyl isobutyl ketone, cyclopentanone, cyclohexanone, n-methylpyrrolidone, dioxan, tetrahydrofuran, 2-methoxyethanol, 2-ethoxyethanol, 1-methoxy-2-propanol, 1,2-dimethoxyethane, ethyl acetate, n-butyl acetate, ethyl-3-ethoxypropionate, methanol, ethanol, isopropanol, n-propanol, n-butanol, isobutanol, sec.-butanol, tert.-butanol, diacetone alcohol, 2-ethylhexyl alcohol, ethylene glycol, diethylene glycol, ethylene glycol dimethyl ether, ethylene glycol diethyl ether, ethylene glycol di-n-butyl ether, diethylene glycol, diethylene glycol dimethyl ether, diethylene glycol diethyl ether, diethylene glycol di-n-butyl ether, polyethylene glycols, THF, dioxan, acetonitrile, propionitrile, dimethylformamide, dimethylsulfoxide, sulfolane, dimethyl carbonate, diethyl carbonate, di-n-butyl carbonate, 1,2-ethylene carbonate, 1,2-propylene carbonate, or 1,3-propylene carbonate, and aromatic hydrocarbons such as toluene and xylene.

In one embodiment the composition is substantially free of solvents, except water, preferably substantially free of any solvent. The term "substantially free" means that the composition of the present invention comprises less than 1 wt.-%, preferably less than 0.1 wt.-%, more preferably less than 0.01 wt.-%, and particularly preferably less than 0.001 wt.-% of these compounds, each based on the total amount of the inventive composition.

Silanes preferred as adhesion promoters and/or reactive diluents are advantageously selected from the group made up of α-methacrylsilanes, α-carbamatosilanes, and α-alkoxysilanes. Suitable examples are (methacryloxymethyl)methyldiethoxysilane and methacryloxymethyltriethoxysilane, N-(triethoxysilylmethyl)-O-methyl carbamate, and N-(methyldiethoxysilylmethyl)-O-methyl carbamate. Appropriate thickeners, in addition to radically (co)polymerized (co)polymerizates, are usual organic and inorganic thickeners such as hydroxymethyl cellulose or bentonite. Suitable catalysts for promoting crosslinking are, in particular, morpholine, N-methylmorpholine, 1,3-diazabicyclo[5.4.6]undecene-7 (DBU). Further suitable catalysts are those based on organic or inorganic heavy-metal compounds such as, for example, cobalt naphthenate, dibutyltin dilaurate, tin mercaptide, tin dichloride, zirconium tetraoctoate, tin naphthenate, tin stearate, antimony dioctoate, lead dioctoate, metal, in particular iron acetylacetonate. All catalysts known for the acceleration of silanol condensation are especially appropriate. These are, for example, organotin, organotitanium, organozirconium, or organoaluminum compounds. Examples of such compounds are dibutylin dilaurate, dibutyltin dimaleate, tin octoate, isopropyltriisostearoyl titanate, isopropyltris(dioctylpyrophosphate) titanate, bis(dioctylpyrophosphate) oxyacetate titanate, tetrabutyl zirconate, tetrakis(acetylacetonato)zirconium, tetraisobutyl zirconate, butoxytris(acetylacetonato)zirconium, tris(ethylacetoacetato)aluminum. Dibutyltin alkyl esters such as dibutyltin alkyl maleates or dibutyltin laurates are particularly suitable, in particular dibutyltin bisethyl maleate, dibutyltin bisbutyl maleate, dibutyltin bisoctylmaleate, dibutyltin bisoleyl maleate, dibutyltin bisacetyl acetate, dibutyltin diacetate, dibutyltin dioctoate, dibutyltin oxide, dibutyltin bistriethoxysilicate, and catalytically effective derivatives thereof. The aforesaid catalysts can be used alone or as a mixture of two or more of the aforesaid catalysts.

The compositions according to the present invention can contain up to 5 wt.-% of such catalysts in the entire composition.

The compositions according to the present invention can furthermore contain up to approximately 7 wt.-%, in particular approximately 3 to approximately 5 wt.-%, antioxidants in the entire composition.

"Approximately" or "about", as used interchangeably herein in relation to numeric values, relate to the reference value ± 10%, preferably ± 5%.

Included among the stabilizers or antioxidants usable in the context of the invention as additives are hindered phenols of high molecular weight (Mw), polyfunctional phenols, and sulfur- and phosphorus-containing phenols. Phenols usable in the context of the invention as additives are, for example, 1,3,5-trimethyl-2,4,6-tris(3,5-di-tert-butyl-4-hydroxybenzyl)benzene; pentaerythritol tetrakis-3-(3,5-di-tert-butyl-4-hydroxyphenyl) propionate; n-octadecyl-3,5-di-tert-butyl-4-hydroxyphenyl) propionate; 4,4-methylenebis(2,6-di-tert-butylphenol); 4,4-thiobis(6-tert-butyl-o-cresol); 2,6-di-tert-butylphenol; 2,4-dimethyl-6-tert-butylphenol, 2,2'-methylene-bis-(4-methyl-6-tert-butylphenol; 4,4'-butylidene-bis-(3-methyl-6-tert-butylphenol); 4,4'-thiobis(3-methyl-6-tert-butylphenol); 2,6-di-tert-butyl-p-cresol; 6-(4-hydroxyphenoxy)-2,4-bis(n-octylthio)-1,3,5-triazine; tetrakis[methylene-3-(3,5-di-tert-butyl-4-hydroxyphenyl) propionate]methane; 1,1,3-tris(2-methyl-4-hydroxy-4-tert-butylphenyl)butane; di-n-octadecyl-3,5-di-tert-butyl-4-hydroxybenzyl phosphonate; 2-(n-octylthio)ethyl-3,5-di-tert-butyl-4-hydroxybenzoate; and sorbitol hexa[3-(3,5-di-tert-butyl-4-hydroxyphenyl) propionate].

Suitable stabilizers, which are typically UV absorbers and represent light stabilizers, can likewise be contained in the compositions, and are preferably selected from t oxanilides, triazines, and benzotriazoles (the latter obtainable as Tinuvin® brands of BASF, SE) and benzophenones, or combinations thereof. It may be advantageous to add light stabilizers that do not absorb UV light.

A selection of suitable preferred UV absorbers and light stabilizers that can be contained in the compositions according to the present invention are: 2-hydroxybenzophenones, for example the 4-hydroxy, 4-methoxy, 4-octyloxy, 4-decyloxy, 4-dodecyloxy, 4-benzyloxy, 4,2',4'-trihydroxy, and 2'-hydroxy-4,4'-dimethoxy derivatives; esters of substituted and unsubstituted benzoic acids such as, for example, 4-tert-butylphenyl salicylate, phenyl salicylate, octylphenyl salicylate, dibenzoylresorcinol, bis(4-tert-butylbenzoyl)resorcinol, benzoylresorcinol, 2,4-di-tert-butylphenyl-3,5-di-tert-butyl-4-hydroxybenzoate, hexadecyl-3,5-di-tert-butyl-4-hydroxybenzoate, octadecyl-3,5-di-tert-butyl-4-hydroxybenzoate, 2-methyl-4,6-di-tert-butylphenyl-3,5-di-tert-butyl-4-hydroxybenzoate.

The compositions according to the present invention can contain up to approximately 2 wt.-%, by preference approximately 1 wt.-% of such UV stabilizers in the entire composition.

The compositions according to the present invention can furthermore contain impact additives (impact modifiers).

Suitable impact additives are, for example, terminally functionalized or non-terminally functionalized thermoplastics such as polysulfones, polyphenylsulfones, polyethersulfones (e.g. Radel and Udel of Solvay, or Ultrason of BASF), polyether ether ketones, polyether ketones, polybutylene terephthalates, polycarbonates, polyether imides, polyethylene, nylon, polyamide imides, poly(aryl ethers), polyesters, and polyarylates.

Suitable elastomers that likewise function as impact modifiers are, for example, EPDM or EPM rubber, polyisobutylene, butyl rubber, ethylene-vinyl acetate, hydrogenated block copolymers made of dienes (e.g. by the hydrogenation of SBR, cSBR, SBS, SIS, IR; such polymers are known, for example, as SEPS and SEBS), copolymers of styrene, butadiene, and ethylene, or styrene, butylene, ethylene, butadiene, butyl rubber, neoprene rubber, and poly(siloxanes).

Polymers having a molecular weight from approximately 5000 to 2,000,000, by preference 10,000 to 1,000,000, such as preferably homo- and copolymers of acrylates and methacrylates, copolymers of methyl methacrylate/ethyl acrylate/methacrylic acid, poly(alkyl methacrylates), poly(alkyl acrylates); cellulose esters and ethers such as cellulose acetate, cellulose acetobutyrate, methyl cellulose, ethyl cellulose; polyvinylbutyral, polyvinylformal, cyclized rubber, polyethers such as polyethylene oxide, polypropylene oxide, polytetrahydrofuran; polystyrene, polycarbonate, polyurethane, chlorinated polyolefins, polyvinyl chloride, copolymers of vinyl chloride/vinylidene chloride, copolymers of vinylidene chloride with acrylonitrile, methyl methacrylate, and vinyl acetate, polyvinyl acetate, copoly(ethylene/vinyl acetate), polymers such as polycaprolactam and poly(hexamethylene adipamide), polyesters such as poly(ethylene glycol terephthalate) and poly(hexamethylene glycol succinate), can also be used as impact additives.

Suitable nanoparticles that can likewise be used as impact modifiers are in particular those based on silicon dioxide (e.g. Nanopox of Nanoresins), aluminum oxide, zirconium oxide, and barium sulfate. They preferably have a particle size of less than 50 nm. Examples of suitable nanoparticles based on silicon dioxide are pyrogenic silicon dioxides that are marketed under the trade name Aerosil® VP8200, VP721, or R972 (Evonik Industries) or the trade name Cab O Sil® TS 610, CT 1110F, or CT 1110G (Cabot company). "Multiwall" and "single wall" nanoparticles having a modified or unmodified surface are likewise usable.

Also conceivable are nanoparticles present in the form of dispersions.

Suitable core-shell particles, which have e.g. a crosslinked silica core and a functionalized shell (e.g. Genioperl of Wacker, Albidur of Nanoresins) or that have, for example, a rubber core (e.g. Zeon, Kaneka), as well as suitable highly functionalized polymers, e.g. polyols, dendritic polymers (e.g. Boltorn of Perstorp), and polyesters, can likewise be used.

The compositions according to the present invention can contain up to 90 wt.-%, by preference up to 80 wt.-%, particularly preferably up to 50 wt.-% impact additives in the entire composition.

The compositions according to the present invention can furthermore contain thermal inhibitors, which are provided in order to prevent premature polymerization. Suitable inhibitors are, for example, hydroquinone, hydroquinone derivatives, p-methoxyphenol, β-naphthol, or sterically hindered phenols such as 2,6-di(tert-butyl)-p-cresol.

Suitable dispersants are water-soluble organic compounds having a high molecular weight that carry polar groups, for example polyvinyl alcohols, polyethers, polyvinylpyrrolidone, or cellulose ethers.

Suitable emulsifiers can be nonionic emulsifiers, and in some cases ionic emulsifiers can likewise be used.

In a further embodiment, the co-initiator systems according to the present invention can be used in the composition with other initiators. These can be, for example, photoinitiators known to one skilled in the art.

The compositions according to the present invention are preferably resin compositions that comprise a resin system selected from the group consisting of epoxy resin systems, benzoxazine systems, polyurethane systems, acrylate resin systems, epoxy acrylate resin systems, cyanoacrylate resin systems, triazine resin systems, polyimide resin systems, ester acrylate resin systems, or thermoplastic resin systems. The resin system is preferably an epoxy resin system.

For the preferred epoxy system it has surprisingly be found that the present co-initiator system even is able to enhance the mechanical properties of gained products. Especially products achieved from compositions comprising an epoxy resin, an initiator according to general formula (I), in particular AgSbF₆, and a carboxylic acid, in particular propionic acid showed increased mechanical properties, especially an improved impact strength. This might be due to the creation of metal nanoparticles, in particular silver nanoparticles, which could be observed for epoxy composition cured with the inventive co-initiator system.

A mixture of the aforesaid resin systems can also be used. In this case a mixture of an epoxy resin system and a benzoxazine system and/or polyurethane system and/or acrylate resin system and/or an epoxy acrylate resin system is preferably used. The combination of an epoxy resin system and an acrylate resin system is particularly preferred.

An "epoxy resin system" is understood in the context of the present invention as a resin composition formed on the basis of epoxy compounds or epoxy-containing compounds. The term "on the basis of" especially means that the composition of the present invention comprises more than 50 wt.-%, preferably more than 60 wt.-%, more preferably more than 70 wt.-%, and particularly preferably more than 80 wt.-% of these compounds, each based on the total amount of the inventive composition.

Epoxy compounds or epoxy-containing compounds of this kind can encompass both oligomeric and monomeric epoxy compounds and epoxies of the polymeric type, and can represent aliphatic, cycloaliphatic, aromatic, or heterocyclic compounds. The epoxy compounds or epoxy-containing compounds of the epoxy resin system generally comprise, on average, at least one polymerizable epoxy group per molecule, by preference at least approximately 1.5 polymerizable epoxy groups per molecule. The polymeric epoxies encompass linear polymers having terminal epoxy groups (e.g. a diglycidyl ether of a polyoxyalkylene glycol), polymers having oxirane units in the molecular framework (e.g. polybutadiene polyepoxide), and polymers having epoxy groups appended to the framework (e.g. a glycidyl methacrylate polymer or copolymer). These epoxies can be pure compounds or mixtures that contain one, two, or more epoxy groups per molecule. The "average" number of epoxy groups per molecule is determined by dividing the total number of epoxy groups in the epoxy-containing material by the total number of epoxy molecules present.

The molecular weight of the epoxy compounds or epoxy-containing compounds of the epoxy resin systems varies from 100 g/mol to a maximum of 10,000 g/mol for polymeric epoxy resins. No limits are likewise set on the epoxy compounds or epoxy-containing compounds in terms of the nature of their basic framework and their substituent groups. For example, the basic framework can belong to any desired type, and the substituent groups present thereon can represent all groups that do not substantially interfere with curing. The substituent groups encompass, for example, halogens, ester groups, ethers, sulfonate groups, siloxane groups, nitro groups, phosphate groups, and the like.

Suitable epoxy resin systems in the context of the present invention are, for example, preferably selected from epoxy resins of the bisphenol A type, epoxy resins of the bisphenol S type, epoxy resins of the bisphenol F type, epoxy resins of the phenol novolac type, epoxy resins of the cresol novolac type, epoxidized products of numerous dicyclopentadiene-modified phenol resins obtainable by the reaction of dicyclopentadiene with numerous phenols, epoxidized products of 2,2',6,6'-tetramethylbiphenol, aromatic epoxy resins such as epoxy resins having a naphthalene basic framework and epoxy resins having a fluorene basic framework, aliphatic epoxy resins such as neopentyl glycol diglycidyl ethers and 1,6-hexanediol diglycidyl ethers, alicyclic epoxy resins such as 3,4-epoxycyclohexylmethyl-3,4-epoxycyclohexane carboxylate and bis(3,4-epoxycyclohexyl) adipate, and epoxy resins having a hetero ring, such as triglycidyl isocyanurate.

The epoxy resins encompass in particular, for example, the reaction product of bisphenol A and epichlorohydrin, the reaction product of phenol and formaldehyde (novolac resins) and epichlorohydrin, glycidyl esters, and the reaction product of epichlorohydrin and p-aminophenol.

Further preferred epoxy resins that are commercially obtainable encompass, in particular, octadecylene oxide, epichlorohydrin, styrene oxide, vinylcyclohexene oxide, glycidol, glycidyl methacrylate, diglycidyl ethers of bisphenol A (e.g. those obtainable under the commercial designations "Epon 828", "Epon 825", "Epon 1004" and "Epon 1010" of Hexion Specialty Chemicals Inc., "DER-331", "DER-332", "DER-334", "DER-732" and "DER-736" of Dow Chemical Co.), vinylcyclohexene dioxide, 3,4-epoxycyclohexylmethyl-3,4-epoxycyclohexene carboxylate, 3,4-epoxy-6-methylcyclohexylmethyl-3,4-epoxy-6-methylcyclohexene carboxylate, bis(3,4-epoxy-6-methylcyclohexylmethyl) adipate, bis(2,3-epoxycyclopentyl)ether, aliphatic epoxide modified with polypropylene glycol, dipentene dioxide, epoxidized polybutadiene (e.g. Krasol products of Sartomer), silicone resins containing epoxide functionality, flame-retardant epoxy resins (e.g. "DER-580", a brominated epoxy resin of the bisphenol type obtainable from Dow Chemical Co.), 1,4-butanediol diglycidyl ethers of a phenol/formaldehyde novolac (e.g. "DEN-431" and "DEN-438" of the Dow Chemical Co.), as well as resorcinol diglycidylethers (e.g. "Kopoxite" of the Koppers Company Inc.), bis(3,4-epoxycyclohexyl) adipate, 2-(3,4-epoxycyclohexyl-5,5-spiro-3,4-epoxy)cyclohexane-meta-dioxan, vinylcyclohexene monoxide, 1,2-epoxyhexadecane, alkyl glycidyl ethers such as, for example, C8-C10-alkyl glycidyl ethers (e.g. "HELOXY Modifier 7" of Hexion Specialty Chemicals Inc.), C12-C14-alkyl glycidyl ethers (e.g. "HELOXY Modifier 8" of Hexion Specialty Chemicals Inc.), butyl glycidyl ethers (e.g. "HELOXY Modifier 61" of Hexion Specialty Chemicals Inc.), cresyl glycidyl ethers (e.g. "HELOXY Modifier 62" of Hexion Specialty Chemicals Inc.), p-tert-butylphenyl glycidyl ethers (e.g. "HELOXY Modifier 65" of Hexion Specialty Chemicals Inc.), polyfunctional glycidyl ethers such as, for example, diglycidyl ethers of 1,4-butanediol (e.g. "HELOXY Modifier 67" of Hexion Specialty Chemicals Inc.), diglycidyl ethers of neopentyl glycol (e.g. "HELOXY Modifier 68" of Hexion Specialty Chemicals Inc.), diglycidyl ethers of cyclohexanedimethanol (e.g. "HELOXY Modifier 107" of Hexion Specialty Chemicals Inc.), trimethylolethane triglycidyl ethers (e.g. "HELOXY Modifier 44" of Hexion Specialty Chemicals Inc.), trimethylolpropane triglycidyl ethers (e.g. "HELOXY Modifier 48" of Hexion Specialty Chemicals Inc.), polyglycidyl ethers of an aliphatic polyol (e.g. "HELOXY Modifier 84" of Hexion Specialty Chemicals Inc.), polyglycol diepoxide (e.g. "HELOXY Modifier 32" of Hexion Specialty Chemicals Inc.), bisphenol F epoxies (e.g. "EPN-1138" or "GY-281" of Huntsman Int. LLC), 9,9-bis-4-(2,3-epoxypropoxy)phenylfluorenone (e.g. "Epon 1079" of Hexion Specialty Chemicals Inc.).

Further preferred commercially obtainable compounds are selected, for example, from Araldite™ 6010, Araldite™ GY-281™, Araldite™ ECN-1273, Araldite™ ECN-1280, Araldite™ MY-720, RD-2 of Huntsman Int. LLC; DEN™ 432, DEN™ 438, DEN™ 485 of Dow Chemical Co., Epon™ 812, 826, 830, 834, 836, 871, 872, 1001, 1031 etc. of Hexion Specialty Chemicals Inc. and HPT™ 1071, HPT™ 1079 likewise of Hexion Specialty Chemicals Inc., as novolac resins furthermore, for example, Epi-Rez™ 5132 of Hexion Specialty Chemicals Inc., ESCN-001 of Sumitomo Chemical, Quatrex 5010 of Dow Chemical Co., RE 305S of Nippon Kayaku, Epiclon™ N673 of DaiNipon Ink Chemistry, or Epicote™ 152 of Hexion Specialty Chemicals Inc. Melamine resins can also be used as reactive resins, e.g. Cymel™-327 and -323 of Cytec.

Terpene-phenol resins can also be used as reactive resins, for example NIREZ™ 2019 of Arizona Chemical.

Phenol resins can also be used as reactive resins, for example YP 50 of Toto Kasei, PKHC of Dow Chemical Co., and BKR 2620 of Showa Union Gosei Corp.

Polyisocyanates can also be used as reactive resins, for example Coronate™ L of Nippon Polyurethane Inc., Desmodur™ N3300 or Mondur™ 489 of Bayer.

Further epoxy resins can contain copolymers of acrylic acid esters with glycidol, for example glycidyl acrylate and glycidyl methacrylate with one or more copolymerizable vinyl compounds. Examples of such copolymers are 1:1 styrene/glycidyl methacrylate, 1:1 methyl methacrylate/glycidyl acrylate, and 62.5:24:13.5 methyl methacrylate/ethyl acrylate/glycidyl methacrylate.

Further usable epoxy resins are well known and contain epoxies such as, for example, epichlorohydrin; alkylene oxides, for example propylene oxide, styrene oxide; alkenyl oxides, for example butadiene oxide; glycidyl esters, for example ethyl glycidate.

Further usable epoxy resins are silicones having epoxide functionality, in particular cyclohexylepoxide groups, in particular those having a silicone basic framework.

In a preferred embodiment, the compositions according to the present invention encompass a mixture of several of the aforesaid epoxy resin systems.

Examples of such mixtures can encompass two or more molecular-weight distributions of epoxy-containing compounds, for example a low molecular weight (below 200), a moderate molecular weight (approx. 200 to 10,000), and a higher molecular weight (above approx. 10,000).

Alternatively or additionally, the epoxy resin can contain a mixture of epoxy-containing materials of differing chemical nature (e.g. aliphatic or aromatic) or functionality (e.g. polar or nonpolar).

A "polyurethane resin system" is understood in the context of the present invention as a resin composition that is formed on the basis of polyurethanes.

A "benzoxazine resin system" is understood in the context of the present invention as a resin composition that is formed on the basis of benzoxazines.

An "acrylate resin system, cyanoacrylate resin system, triazine resin system, polyimide resin system, ester acrylate resin system" is understood in the context of the present invention as a resin composition that is formed on the basis of acrylates, cyanoacrylates, triazines, polyimides, and/or ester acrylates.

The compositions of the invention preferably comprise, relative to the total weight of the composition, 50-99 wt.-%, preferably 60-98 wt.-% more preferably 80-97 wt.-% of the at least one resin system, preferably at least one epoxy resin system; 0.05 to 5 wt.-%, preferably 0.1 to 2 wt.-% of the initiator according to formula (I); and 0.5 to 15, preferably 1 to 10 wt.-% of the at least one carboxylic acid.

The compositions according to the present invention, which contain at least one initiator according to the present invention, are curable at room temperature. Specifically, curing of the compositions or resin systems according to the present invention is accomplished by cationic polymerization, the polymerization preferably being initiated by the activation (hydrolysis) of the initiator according to formula (I) by the carboxylic acid and optionally water.

A further subject of the present invention relates to the use of the co-initiator systems according to the present invention in the aforesaid compositions, in particular epoxy resin systems, to facilitate curing. These compositions/systems can be used as adhesives, composite materials, sealing compounds, materials, and for the coating of surfaces.

In various embodiments, a composition according to the present invention can be applied as a coating compound onto a surface and then cured. Suitable substrates are, in particular, wood, paper, textile, leather, nonwoven fiber, plastics (polycarbonate, polymethylmethacrylate (PMMA), polystyrene, polyester, polyolefin, epoxy resins, melamine resins, triacetyl cellulose resins, ABS resins, AS resins, norbornene resins, etc.), glass, ceramic, paper, mineral construction materials such as cement blocks and fiber cement panels, metals, such as steel or aluminum, or coated metals. The substrate can also be a panel, a film or a three-dimensionally shaped element.

A variety of application methods can be utilized as a method for applying the composition (in this case as a coating compound or adhesive) onto the substrate, for example spraying, flow-coating, blade-coating, brushing, pouring, immersion, impregnation, dripping, rolling, sprinkle coating, or immersion coating.

In this context, the substrate to be coated can itself be stationary while the application device or system is moved. In some cases the substrate to be coated can also be moved, while the application system is stationary relative to the substrate or is moved in appropriate fashion.

In a further preferred embodiment, the initiators according to the present invention are used for the curing of materials, in particular shaped elements. Materials (shaped elements) of this kind that are manufactured using the initiators according to the present invention preferably exhibit a high level of mechanical stability and strength.

A further subject of the present invention is the use of the initiators according to the present invention in curable systems. Curable systems of this kind are preferably resin systems, for example epoxy resin systems, benzoxazine systems, polyurethane systems, acrylate resin systems, epoxy acrylate resin systems, cyanoacrylate resin systems, triazine resin systems, polyimide resin systems, ester acrylate resin systems, or thermoplastic resin systems, or further resin systems known to one skilled in the art. Epoxy resin systems are, however, preferred.

A further subject of the present invention relates to a method for preparing a co-initiator system according to the invention, comprising mixing the initiator of general formula (I) and the at least one carboxylic acid and optionally water. The preparation is preferably carried out in situ and the freshly prepared initiator system is then combined with the resin system to provide the resin composition.

Accordingly, another subject of the invention is a method for preparing a resin composition as described herein, comprising
(a) preparing a co-initiator system according to the invention in situ by mixing the initiator of general formula (I) and the at least one carboxylic acid and optionally water;
(b) combining the co-initiator system with at least one resin system to obtain the resin composition.

Another subject of the invention is a method for curing a resin composition as described herein, comprising
(a) providing a resin composition of the invention; and
(b) curing said resin composition at a temperature in the range of between 0 and 30°C, preferably about 20°C.

As already detailed above, the present invention also relates to the cured product that is obtained by curing the compositions according to the present invention.

The cured product is preferably a coating, a film, a material, a composite material, an adhesive, or a sealing compound.

The following examples further serve to illustrate the invention without, however, limiting it thereto.

### Examples

### Example 1:

50 mg (0.147 mmol, 1 wt.-% relative to the total composition weight) silver hexafluoroantimonate (AgSbF₆) was dissolved in 2 wt.-% acetic acid (100 mg; 1,66 mmol). After stirring for 30 minutes with a magnetic stirrer, 4.85 g (19 mmol; 97 wt.-%) of degassed 3,4-epoxycyclohexylmethyl-3,4-epoxycyclohexanecarboxylate was added and stirred at 640 rpm. Curing was observed in 16 h. The glass transition temperature of the cured thermoset was determined by DSC with a Mettler TA 3000 DSC apparatus and a heating rate of 10K/min: T_{g}: 139°C.

Thermal analysis was determined by thermogravimetric analysis using a Mettler Toledo Model TGA/SDTA851 device. TGA results showed that the cured epoxy thermoset undergoes thermal degradation beginning at 187°C with a total mass loss of 96%.

The maximum load and the shear strength of the bonding between two identical substrates was determined using an Instron Universal testing machine 3166 at a crosshead speed of 2 mm/min, 180° according to ISO 4587:2003. The results are shown in Table 1.

**Table 1: Tensile shears on different substrates (12,7 mm)**

| **Substrates** | **Bonding after 30 minutes** | **Bond strength (N/mm²) after 24 h** | **Bond strength (N/mm²) after 48 h** |
|---|---|---|---|
| PVC-PVC | Bonding observed | 4.36 | 10.9 |
| ABS-ABS | Bonding observed | 5.29 | 6.5 |
| Laminate-Wood | No bonding | - | 11.8 |
| Mild steel | Bonding observed | n.d. | 54.0 |
| Aluminum | Bonding observed | n.d. | 16.5 |
| Glass | Bonding observed | n.d. | n.d. |

| | | | |
|---|---|---|---|
| "n.d." in this context means that this measurement has not be made | | | |

### Example 2:

25 mg (0.0735 mmol, 0.5 wt.-% relative to the total composition weight) silver hexafluoroantimonate (AgSbF₆) was dissolved in 7 wt.-% propionic acid (350 mg; 4,72 mmol). After stirring for 30 minutes with a magnetic stirrer, 4.62 g (18.3 mmol; 92.5 wt.-%) of degassed 3,4-epoxycyclohexylmethyl-3,4-epoxycyclohexanecarboxylate was added and stirred at 640 rpm. Curing was observed in 1 h. The glass transition temperature of the cured thermoset was determined by DSC with a Mettler TA 3000 DSC apparatus and a heating rate of 10K/min: T_{g}: 117°C.

Thermal analysis was determined by thermogravimetric analysis using a Mettler Toledo Model TGA/SDTA851 device. TGA results showed that the cured epoxy thermoset undergoes thermal degradation beginning at 203°C with a total mass loss of 90%.

The maximum load and the shear strength of the bonding between two identical substrates was determined using an Instron Universal testing machine 3166 at a crosshead speed of 2 mm/min, 180° according to ISO 4587:2003. The results are shown in Table 2.

**Table 2: Tensile shears on different substrates (12,7 mm)**

| **Substrates** | **Bonding after 60 minutes** | **Bond strength (N/mm²) after 48 h** |
|---|---|---|
| PVC-PVC | Bonding observed | Substrate failure |
| ABS-ABS | Bonding observed | 8.0 |
| Laminate-Wood | Bonding observed | 5.5 |
| Mild steel | Bonding observed | 29.6 |
| Aluminum | Bonding observed | 28.1 |
| Glass | Bonding observed | n.d. |

| | | |
|---|---|---|
| "Substrate failure" in this context means that the adhesive bond was so strong that the substrate itself broke. | | |

### Example 3:

50 mg (0.147 mmol, 1 wt.-% relative to the total composition weight) silver hexafluoroantimonate (AgSbF₆) was dissolved in 5 wt.-% propionic acid (250 mg; 3,37 mmol). After stirring for 30 minutes with a magnetic stirrer, 4.7 g (18.6 mmol; 94 wt.-%) of degassed 3,4-epoxycyclohexylmethyl-3,4-epoxycyclohexanecarboxylate was added and stirred at 640 rpm. Curing was observed in 5 h. The glass transition temperature of the cured thermoset was determined by DSC with a Mettler TA 3000 DSC apparatus and a heating rate of 10K/min: T_{g}: 122°C.

Thermal analysis was determined by thermogravimetric analysis using a Mettler Toledo Model TGA/SDTA851 device. TGA results showed that the cured epoxy thermoset undergoes thermal degradation beginning at 148°C with a total mass loss of 2% and at 245°C with a total mass loss of 96%.

The maximum load and the shear strength of the bonding between two identical substrates was determined using an Instron Universal testing machine 3166 at a crosshead speed of 2 mm/min, 180° according to ISO 4587:2003. The results are shown in Table 3.

**Table 3: Tensile shears on different substrates (12,7 mm)**

| **Substrates** | **Bonding after 60 minutes** | **Bond strength (N/mm²) after 24 h** | **Bond strength (N/mm²) after 48 h** |
|---|---|---|---|
| PVC-PVC | Bonding observed | n.d. | Substrate failure |
| ABS-ABS | Bonding observed | 2.7 | 9.1 |
| Laminate-Wood | Bonding observed | 8.2 | 12.5 |
| Mild steel | Bonding observed | n.d. | 50.6 |
| Aluminum | Bonding observed | n.d. | 30.1 |
| Glass | Bonding observed | n.d. | n.d. |

### Example 4:

10 mg (0.029 mmol, 0.2 wt.-% relative to the total composition weight) silver hexafluoroantimonate (AgSbF₆) was dissolved in 7 wt.-% propionic acid (350 mg; 4,72 mmol). After stirring for 30 minutes with a magnetic stirrer, 4.64 g (18.3 mmol; 92.8 wt.-%) of degassed 3,4-epoxycyclohexylmethyl-3,4-epoxycyclohexanecarboxylate was added and stirred at 640 rpm. Curing was observed in 5 h.

The glass transition temperature of the cured thermoset was determined by DSC with a Mettler TA 3000 DSC apparatus and a heating rate of 10K/min: T_{g}: 124°C.

Thermal analysis was determined by thermogravimetric analysis using a Mettler Toledo Model TGA/SDTA851 device. TGA results showed that the cured epoxy thermoset undergoes thermal degradation beginning at 230 °C with a total mass loss of 90%.

**Table 4: Tensile shears on different substrates (12, 7 mm)**

| Substrates | **Bond strength (N/mm²) after 48 h** |
|---|---|
| PVC-PVC | 2,60 |
| ABS-ABS | 5,50 |
| Mild steel | 6,05 |
| Glass | Bonding observed√ |

### Example 5:

20 mg (0.0582 mmol, 0.4 wt-%) of silver hexafluoroantimonate is dissolved in 7 wt-% propionic acid (350 mg, 4.72 mmol). After stirring for 30 minutes 4.63 g (18.3 mmol; 92.6 wt.-%) of degassed 3, 4-epoxycyclohexylmethyl-3,4-epoxycyclohexanecarboxylate was added to the mixture. Stirring rate is 640 rpm. The curing was observed in 6-8 h.

The glass transition temperature of the cured thermoset was determined by DSC (differential scanning calorimetry) with Mettler TA 3000 DSC apparatus. The heating rate is 10 °C/min. Tg: 122 °C. TGA results show that the cure epoxy thermoset undergoes thermal degradation beginning at 292 °C with a total mass loss of 95%.

**Table 5: Tensile shears on different substrates (12,7 mm)**

| Substrates | **Bonding after 60 minutes** | **Bond strength (N/mm²) after 48 h** |
|---|---|---|
| PVC-PVC | Bonding observed√ | Substrate failure |
| ABS-ABS | Bonding observed√ | 4,7 |
| Laminate-wood | No bonding observed× | 22,1 |
| Mild steel | Bonding observed√ | 27,1 |
| Aluminium | Bonding observed√ | 40,4 |
| PMMA | Bonding observed√ | 2,6 |

### Example 6:

25 mg (0,091 mmol, 1 wt-%) of potassium hexafluoroantimonate is dissolved in 10 equivalent of H₂O (0,88 mmol, 16 mg), after stirring for 30 minutes, 2 wt-% acetic acid (50 mg, 0.83 mmol). After stirring for 30 minutes 2.42 g (7.1 mmol), (97 wt-%) of degassed Bisphenol A diglycidyl ether was added to the mixture. Stirring rate is 640 rpm. Curing was obtained in 20 minutes.

The glass transition temperature of the cured thermoset was determined by DSC (differential scanning calorimetry) with Mettler TA 3000 DSC apparatus. The heating rate is 10 °C/min. Tg: 124 °C.

TGA results show that the cure epoxy thermoset undergoes thermal degradation beginning at 288 °C with a total mass loss of 73%.

**Table 6: Tensile shears on different substrates (12,7 mm)**

| Substrates | **Bonding after 60 minutes** | **Bond strength (N/mm²) after 48 h** |
|---|---|---|
| ABS-ABS | Bonding observed√ | 14 |
| Aluminium | Bonding observed√ | 10,3 |

### Example 7:

25 mg (0.073 mmol, 1 wt-%) of silver hexafluoroantimonate is dissolved in 2 wt-% acetic acid (50 mg, 0.83 mmol). After stirring for 30 minutes 2.43 gram (97 wt-%, 7.1 mmol), of degassed Bisphenol A diglycidyl ether was added to the mixture. Stirring rate is 640 rpm. Curing was observed in 1 hour.

The glass transition temperature of the cured thermoset was determined by DSC (differential scanning calorimetry) with Mettler TA 3000 DSC apparatus. The heating rate is 10° C/min. Tg: 131 °C.

TGA results show that the cure epoxy thermoset undergoes thermal degradation beginning at 284 °C with a total mass loss of 83%.

**Table 7: Tensile shears on different substrates (12,7 mm)**

| Substrates | **Bond strength (N/mm²) after 48 h** |
|---|---|
| Mild steel | 19,3 |

### Example 8:

12.5 mg (0.045 mmol, 0.5 wt-%) of potassium hexafluoroantimonate is dissolved in 2 wt-% acetic acid (50 mg, 0.83 mmol) in 10 equivalents of water (0,88 mmol, 16 mg). After stirring for 30 minutes, 2.43 g (97.5 wt-%, 7.1 mmol) of de-gassed Bisphenol A diglycidyl ether was added to the mixture. Stirring rate is 640 rpm. Curing was observed in 1 hour.

The glass transition temperature of the cured thermoset was determined by DSC (differential scanning calorimetry) with Mettler TA 3000 DSC apparatus. The heating rate is 10° C/min. Tg: 84 °C. TGA results show that the cure epoxy thermoset undergoes thermal degradation beginning at 298 °C with a total mass loss of 80%.

### Table 8: Tensile shears on different substrates (12,7 mm)

| Substrates | **Bond strength (N/mm²) after 48 h** |
|---|---|
| ABS | Substrate failure |

### Example 9:

25 mg (0.13 mmol, 1 wt-%) of silver boron tetrafluoride is dissolved in 2.5 wt-% propionic acid (62,5 mg, 0,84 mmol). After stirring for 30 minutes, 2,41 g (96,5 wt-%, 9,5 mmol) of degassed 3,4-epoxycyclohexylmethyl-3,4-epoxycyclohexanecarboxylate was added to the mixture. Stirring rate is 640 rpm. Curing was observed overnight.

The glass transition temperature of the cured thermoset was determined by DSC (differential scanning calorimetry) with Mettler TA 3000 DSC apparatus. The heating rate is 10° C/min. Tg: 144,7 °C.

TGA results show that the cure epoxy thermoset undergoes thermal degradation beginning at 157 °C with a total mass loss of 10% and 300 °C with a total mass of 81%.

### Example 10:

25 mg (0.13 mmol, 1 wt-%) of silver boron tetrafluoride is dissolved in 2 wt-% propionic acid (50 mg, 0.84 mmol). After stirring for 30 minutes, 2,43 g (96,5 wt-%, 7,1 mmol) of degassed Bisphenol A diglycidyl ether. Stirring rate is 640 rpm. Curing was observed in overnight.

The glass transition temperature of the cured thermoset was determined by DSC (differential scanning calorimetry) with Mettler TA 3000 DSC apparatus. The heating rate is 10° C/min. Tg: 127 °C.

TGA results show that the cure epoxy thermoset undergoes thermal degradation beginning at 237 °C with a total mass loss of 3% and 333 °C with a total mass of 79%.

## Claims

1. Co-initiator system, wherein the system comprises
(1) at least one initiator of the general formula (I)
{Mⁿ⁺(X)^{a-}_{n/a}} (I),
wherein M is a metal cation, preferably selected from the group consisting of Na, K, Ag, Fe, Mg, Ca, Co, Cu, Al, and Ti" especially K and Ag, n is an integer from 1 to 6, especially 1; X is the counterion selected from the group consisting of hexafluoroantimonate (SbF₆⁻), hexafluorophosphate (PF₆⁻), boron tetrafluoride (BF₄⁻), hexafluoroaluminate (AlF₆³⁻), trifluoromethanesulfonate (CF₃SO₃⁻), nitrate (NO₃⁻), hexafluoroarsenate (AsF₆⁻), tetrakis(pentafluorophenylborate) (B[C₆F₅]₄⁻), tetrakis[3.5-bis(trifluoromethyl)phenyl]borate (B[C₆H₃(CF₃)₂]₄⁻), tetraphenylborate (B[C₆H₅]₄⁻), hexafluorotitanate (TiF₆²⁻), hexafluorogermanate (GeF₆²⁻), hexafluorosilicate (SiF₆²⁻), hexafluoronickelate (NiF₆²⁻), or hexafluorozirconate (ZrF₆²⁻), especially hexafluoroantimonate (SbF₆⁻) and boron tetrafluoride (BF₄⁻), and a is an integer from 1 to 3, and
(2) at least one carboxylic acid.

2. Co-initiator system according to claim 1, wherein the at least one carboxylic acid is selected from the group consisting of unsaturated or saturated, substituted or unsubstituted, aliphatic, cycloaliphatic or aromatic C₁₋₂₆ mono-, di- or polycarboxylic acids, preferably saturated C₂₋₂₀ mono-or dicarboxylic acids, more preferably acetic acid or propionic acid.

3. Co-initiator system according to claim 1 or 2, wherein the weight ratio of initiator of general formula (I):carboxylic acid ranges from 1:100 to 2:1, preferably 1:20 to 1:2.

4. Resin composition comprising at least one co-initiator system according to any one of claims 1 to 3 and at least one resin system.

5. Resin composition according to claim 4, wherein the resin composition comprises
(a) 50 to 99 wt.-%, preferably 80 to 98 wt.-% of at least one resin system;
(b) 0.05 to 5 wt.-%, preferably 0.1 to 2 wt.-% of the initiator of the general formula (I);
(c) 0.5 to 15 wt.-%, preferably 1.0 to 10 wt.-% of at least one carboxylic acid; and
(d) 0 to 5 wt.-% or preferably 0.1 to 2 wt% or no water.

6. Resin composition according to claim 4 or 5, wherein the at least one resin system is selected from the group consisting of epoxy resin systems, benzoxazine systems, polyurethane systems, acrylate resin systems, epoxy acrylate resin systems, cyanoacrylate resin systems, triazine resin systems, polyimide resin systems, ester acrylate resin systems, and a thermoplastic resin system, preferably an epoxy resin system.

7. Resin composition according to any one of claims 4 to 6, wherein the preparation is curable at room temperature.

8. Method for preparing a co-initiator system according to any one of claims 1 to 3, comprising mixing the initiator of general formula (I) and the at least one carboxylic acid and optionally water.

9. Method for preparing a resin composition according to any one of claims 4 to 7, comprising
(a) preparing a co-initiator system according to any one of claims 1 to 3 in situ by mixing the initiator of general formula (I) and the at least one carboxylic acid and optionally water;
(b) combining the co-initiator system with at least one resin system to obtain the resin composition according to any one of claims 4-7.

10. Method for curing a resin composition according to any one of claims 4 to 7, comprising
(a) providing a resin composition according to the method of claim 9; and
(b) curing said resin composition at a temperature in the range of between 0 and 30°C, preferably about 20°C.

11. Cured product obtainable by curing a resin composition according to the method of claim 10.

12. Cured product according to claim 11, wherein the product is selected from the group consisting of a coating, a film, a composite material, an adhesive, or a sealing compound.

13. Use of a co-initiator system according to any one of claims 1 to 3 for cure of a resin system, preferably an epoxy resin system.
